# EUROPEAN PATENT SPECIFICATION

(11) **EP 2 823 975 B1**
(45) Date of publication and mention of the grant of the patent: **21.03.2018**
(21) Application number: 13176136.3
(22) Date of filing: 11.07.2013
(51) Int. Cl.: B60C 27/06

(54) **Fixing device for a vehicle anti-skid device, an anti-skid device and an anti-skid arrangement comprising the fixing device and the anti-skid device**
Fixiervorrichtung für eine Fahrzeug-Antirutschvorrichtung und Antirutschvorrichtung und Antirutsch-Anordnung mit der Fixiervorrichtung und Antirutschvorrichtung
Dispositif de fixation pour dispositif anti-dérapant de véhicule, ledit dispositif antidérapant, ensemble de dispositif antidérapant comportant ce dernier ainsi que le dispositif de fixation associé

(43) Date of publication of application: 14.01.2015
(73) Proprietor: König IP AB, 330 33 Hillerstorp (SE)
(72) Inventor: Arrigoni Neri, Marco, 23811 Ballabio (LC) (IT); Farina, Luigi, 23843 Dolzago (LC) (IT); Colombo, Matteo, 23885 Calco (IT)
(74) Representative: Petruzziello, Aldo

(56) References cited:
- US-A- 2 397 277
- US-A- 2 477 051
- US-A- 3 935 891

## Description

### TECHNICAL FIELD

The present invention refers to an anti-skid arrangement comprising an anti-skid device, comprising a friction increasing member such as a snow chain, adapted to be mounted from the part of a wheel facing towards the outside of a vehicle. The invention also relates to a fixing device for fixing an anti-skid device in an anti-skid arrangement.

### BACKGROUND OF THE INVENTION

Snow chains which are mounted from the outside commonly comprise a central hub from which extends radially a plurality of arms or spokes which are joined to a terminal element which embraces the tread of a vehicle tyre. The terminal elements of the spokes are joined to portions of chain, which follow the tread of the tyre. In this manner the portions of chain can scratch or bite into the snow or into the ice on the road surface to exert a greater friction and to avoid skidding or slipping of the tyres.

For mounting this type of snow chains a fastening device is provided, which is fastened to a wheel bolt or nut. A tensioning strap or chain, which passes through a tensioning/locking device mounted on the hub of the snow chains, is constrained to the fastening device. Thus the user, by pulling the strap manually or by means of a tensioning device, brings the hub of the anti-skid device close to the hub of the wheel, tensioning the snow chains. An anti-skid arrangement of this type is previously known from EP 2 050 590 A1.

Although the fastening arrangement in EP 2 050 590 A1 allows a snow-chain to be securely attached to a wheel rim in an expedient manner, there remains a need for a further improved anti-skid arrangement.

Other anti-skid arrangements are known from US-A-2397277, US-A-3935891 and US-A-2477051.

In particular, the invention aims at providing a further simplified fastening arrangement for an anti-skid device, allowing the anti-skid device to be quickly and reliably secured to a vehicle wheel while requiring a minimum of manipulation.

### SUMMARY OF THE INVENTION

The present invention provides a fixing device according to claim 1 and a method, according to claim 16, for mounting an anti-skid device on a vehicle wheel.

In accordance with the invention, there is provided a fixing device for a vehicle tyre anti-skid device. The fixing device comprises a plug portion and a coupling portion, the plug portion being configured to fit into a centre bore in a wheel rim. The plug portion comprises locking means for releasably fixing the fixing device in the centre bore in the wheel rim and the coupling portion is arranged for coupling the fixing device to the anti-skid device.
The locking means may be one or more locking elements, as set out herein.

The fixing device may be considered to constitute an intermediate connection member for connecting an anti-skid device, in particular a snow chain, to a vehicle wheel on the side of the vehicle wheel which is facing outward, toward a person fitting the anti-skid device on the vehicle wheel and may be delivered to a user as a separate part or as an integrated element in an anti-skid arrangement. The fixing device disclosed herein allows for simple, quick and intuitive application of an anti-skid device requiring a minimum of instructions to understand and use. The coupling portion may be simply a portion of the fixing device that protrudes from the centre of the wheel rim when the fixing device is applied to the wheel rim. In such case, the protruding coupling portion may be used for attaching a fastening element such as a clamp or a cap onto the coupling portion. However, the coupling portion of the fixing device may be provided with one or more coupling elements which are adapted to engage with one or more corresponding coupling elements on the anti-skid device. The corresponding coupling elements on the fixing device and on the anti-skid device are generally of the mating type including a female and a male part such as a rim and a groove or a protrusion and a hole.

The plug portion of the fixing device may be sized and configured to fit commonly available wheel rims. Thus, the plug portion of the fixing device may have an outer diameter in the order of from 40 to 60 mm. The fixing device may be offered in a range of sizes fitting different commercially available wheel rims. Another option is to provide adaptor rings that can be used to adapt the size of the plug portion of the fixing device to differently sized wheel rim centre holes. Such adaptor rings may be made from metal or plastic, such as nylon, and may be sold separately or be provided as an accessory together with an anti-skid arrangement or any part of the anti-skid arrangement such as the fixing device, or the anti-skid device, or may be provided together with a wheel rim.

No external tools are required when fitting and fastening the anti-skid device on the vehicle wheel using the plug-in fixing device disclosed herein and the anti-skid device can be applied and fastened to the wheel with a few simple and intuitive application steps.

The releasable locking means may comprise a snap-in locking arrangement, such as a locking arrangement comprising an intermediate actuation member such as a spring or a gear mechanism. A release mechanism comprising an intermediate actuation member may be arranged to move one or more locking elements such as locking balls, locking pins, locking knobs, etc. which are arranged at the periphery of the plug portion of the fixing device. The locking elements may be arranged to protrude radially from the outer surface of the plug portion when the arrangement is in a locking position and to be retracted into the interior of the plug portion when the fixing device is to be inserted into a centre bore of a wheel rim or to be removed from the wheel rim.

Any spring arrangement or gear arrangement as known in the art may be employed to effect the desired movement of the locking elements between the retracted release position and the protruding locking position. Accordingly, a spring mechanism may involve a spring extending in the axial direction of the fixing device and being arranged to directly or indirectly cause a locking element to move between the different positions, as disclosed hereinafter or the spring mechanism may involve a radially compressible spring acting directly or indirectly on the locking element or locking elements. A spring actuated release/locking mechanism will generally be responsive to a force applied in the axial direction of the fixing device, such as a pushing or pulling force, although torsional forces may also be involved.

Alternatively or in addition thereto, the releasable locking means may comprise a manually actuated release mechanism arranged to move one or more locking elements such as a locking pin or a locking groove between a release position and a fixing position. By a manually actuated locking/release mechanism is implied a mechanism without intermediate actuating members such as springs or gears. The manually actuated lockable/releasable mechanisms may be of any kind known in the art such a key/bolt, a bayonet-arrangement, etc. A manually actuated release/locking mechanism will generally be responsive to torsional forces or to a combination of a torsional force and a force applied in the axial direction of the fixing device.

A locking arrangement comprising a locking element which can be moved between an inner release position and an outer locking position may comprise an inner core part which is telescopically movable within an outer casing. The arrangement preferably comprises at least one spring, which is compressible in an axial direction of the fixing device. By axial compression of the compressible spring, the inner core part can be moved in relation to the outer casing. At least one locking ball may rest in a guiding groove arranged in the core part. The guiding groove has a deeper portion and a shallower portion and the locking ball moves from the shallower portion to the deeper portion when the spring is compressed. This means that as the locking ball moves along the guiding groove in the axial direction of the fixing device, it is simultaneously moved inward in the radial direction of the fixing device, causing the locking ball to be retracted into the fixing device. When the compressive force on the spring is released, the spring again expands and moves the core part back to the rest position at the same time as the locking ball moves to the shallow part of the guiding groove where it partially protrudes radially from the outer casing through a hole in the outer casing.

The releasable locking means preferably comprises a plurality of locking balls which are arranged to move in corresponding guiding grooves in the core part of the fixing device. In the case where the locking means comprises a plurality of locking balls, the locking balls are preferably arranged equidistantly around the periphery of the outer casing in the plug portion of the fixing device.

The releasable locking means may be arranged to be controlled by a push-button or other push-element which is placed at an outer end, i.e. at an end remote from the plug portion of the fixing device. Pressing the bush-button in the axial direction of a spring-actuated fixing device, causes the compressible spring or springs in the fixing device to be compressed and the inner core part of the fixing device to slide inside the outer casing at the same time allowing the locking balls to move in the guiding groove from the shallower portion into the deeper portion of the guiding groove. Alternatively, the releasable locking means may be arranged to respond to a pulling force applied to the outer end of the inner core part of the fixing device or to a rotational force or a combination of rotational and axial forces. In order to facilitate operation of the release/locking mechanism, the fixing element is preferably provided with a suitable control element such as a knob, a button, a handle, etc.

The fixing device may comprise means for tensioning of an anti-skid device which has been attached to the fixing device.

The means for tensioning of an anti-skid device may be coupled to or form part of the locking means.

In accordance with the invention, there is also offered an anti-skid device which is adapted for coupling to a fixing device as disclosed herein. The anti-skid device comprises a friction increasing member such as a snow chain and a coupling portion for coupling the anti-skid device to the fixing device.

In accordance with the invention, there is also offered an anti-skid arrangement for a vehicle tyre. The anti-skid arrangement comprises a fixing device as disclosed herein and an anti-skid device as disclosed herein.

The coupling portion on the fixing device and the coupling portion on the anti-skid device may be arranged to be connected by means of mating connection elements provided on the fixing device and on the anti-skid device. The mating connection elements may be pre-connected by a manufacturer, implying that the anti-skid arrangement is delivered to a user as a complete assembly. Pre-assembled connection elements may be permanently coupled to each other. With a permanent coupling as used herein is implied a coupling that is intended to remain intact during use of the anti-skid arrangement as well as when it is not in use. Usually, a permanent coupling cannot be broken without damaging or destroying the coupling elements.

Alternatively, the mating connection elements may be arranged to be connected by a user of the anti-skid arrangement at the time of use of the anti-skid arrangement. Such mating connection elements may include hooks and loops, snap-in or snap-on connectors, screw-connectors, slide in connectors, hinges, straps, etc. Combinations of different types of connectors may also be used.

The connection may be a screw connection with a screw-thread placed on a first coupling part being one of the mating connection elements and a pin on the second coupling part being the other mating connection element and being adapted to move in the screw-thread. The screw connection may comprise or constitute a means for tensioning of the anti-skid device when applied to a tyre.

The coupling portions on the fixing device and on the anti-skid device may alternatively be attached to each other by means of a hinge, such as a pre-connected hinge or a hinge which is assembled by a user. The hinge connection may also be arranged to tension the anti-skid device when applied to a tyre.

The anti-slip arrangement may be provided with a handle which is directly or indirectly attached to one of the mating connection elements. The handle is arranged for manipulation of the mating connection elements between at least two different and distinct positions. Such different positions may be a decoupling position and a coupling position and/or may be a tightening position and a loosening position. The term "handle" is used herein in a broad sense to imply any grippable member that may be used to operate or control the parts of the coupling arrangement.

On a screw connection, a handle may be arranged on an outer screw-on fastener element having an inner thread, e.g. a screw-nut, and may extend radially from the outer fastener element to allow the fastener element to be screwed onto a fastener element having an outer thread, e.g. a screw-bolt or a fastener element having a pin or other protruding element that can engage with the inner thread on the screw-on fastener element.

On a hinge connection, the handle may be in the form of a lever which can be operated to move the connection between the different positions, as disclosed herein.

There is also provided a wheel rim for use together with a fixing device and an anti-skid device as disclosed herein. The wheel rim has a centre bore which is adapted to receive and retain a fixing device as disclosed herein. Accordingly, the centre bore has a diameter exceeding the diameter of the plug portion of the fixing device. The centre bore may have an inner rim or groove or other element for engaging with the locking means on the plug portion of the fixing device. The inner diameter of the centre bore may be uniform along the length of the centre bore or may change e.g. forming a restriction or a dilatation which may engage with a locking element on the plug portion of the fixing device. Although a cylindrical shape may be preferred for the inner bore in the wheel rim, other shapes such as polygonal, oval, star-shapes, etc. may be used with a matching shape and size of the plug portion of the fixing device.

In order to allow for the fixing device and an anti-skid device connected to the fixing device to rotate inside the centre bore of the wheel rim, the inner surface of the centre bore of the wheel rim and/or the outer surface of the fixing device and/or an adaptor ring may consist of a friction-reducing material such as nylon or other plastic material. A certain degree of free-wheeling of the fixing device and an anti-skid device connected thereto may be desired to reduce wear on the rim at strong acceleration or deceleration.

The invention also involves a method for mounting an anti-skid device on a vehicle wheel, comprising the steps of:
a) providing a fixing device as disclosed herein,
b) providing an anti-skid device according as disclosed herein,
c) providing a vehicle wheel having a wheel rim as disclosed herein,
d) connecting the coupling portion of the fixing device with the coupling portion of the anti-skid device,
e) inserting the plug portion of the fixing device into the centre bore of the wheel rim and ascertaining that the releasable locking means is in a locked position in the centre bore of the wheel rim;
wherein step d) may be performed before step e) or step e) may be performed before step d).

### BRIER DESCRIPTION OF THE DRAWINGS

The invention will now be described in greater detail with reference to the figures shown on the appended drawings. In the drawings
- Fig. 1: shows a fixing device for fitting in a centre bore in a wheel hub with the fixing device in a first position,
- Fig. 2: shows a fixing device for fitting in a centre bore in a wheel hub with the fixing device in a second position,
- Fig. 3: shows a section through the fixing device in Fig. 1 taken along the line III-III,
- Fig. 4: shows a section through the fixing device in Fig. 2 taken along the line IV-IV,
- Fig. 5: shows the fixing device in Figs. 1-4 while being inserted in a centre bore in a wheel rim,
- Fig. 6: shows a detail view of a center hole in a wheel rim,
- Fig. 7: shows the fixing device in Figs. 1-4 inserted in a centre bore in a wheel rim,
- Fig. 8: shows a wheel with an anti-skid arrangement mounted on the wheel,
- Fig. 9: shows a coupling arrangement between the fixing device and the anti-skid device in Fig. 8 in a first coupling position,
- Fig. 10: shows the coupling arrangement in Fig. 9 in a second coupling position,
- Fig. 11: shows an outer casing of the fixing device in the anti-skid arrangement in Fig. 8,
- Fig. 12: shows a wheel with an anti-skid arrangement mounted on the wheel,
- Fig. 13: shows a coupling arrangement between the fixing device and the anti-skid device in Fig. 12 in a first coupling position,
- Fig. 14: shows the coupling arrangement in Fig. 9 in a second coupling position; and
- Fig. 15: shows the fixing device in the anti-skid arrangement in Fig. 12.

### DETAILED DESCRIPTION

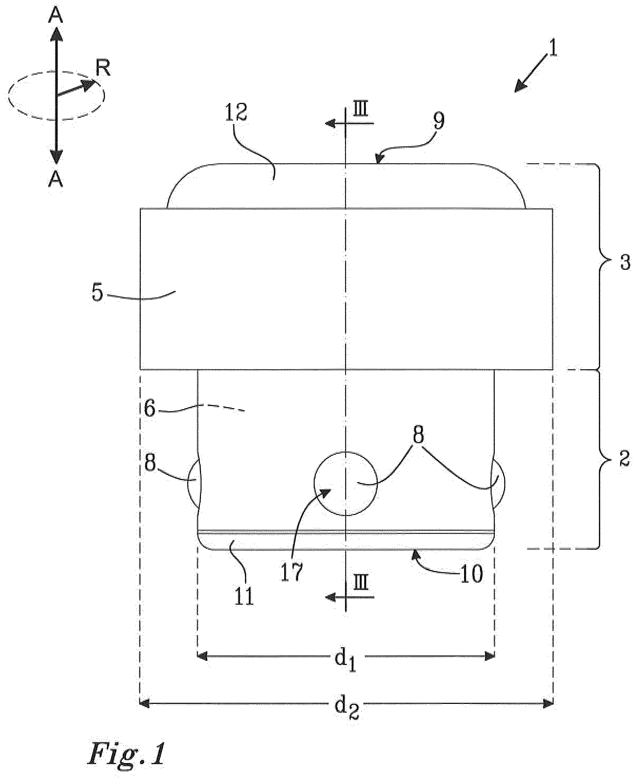

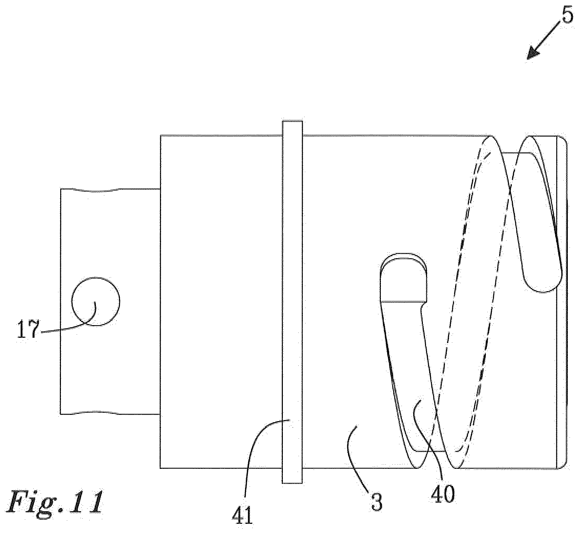

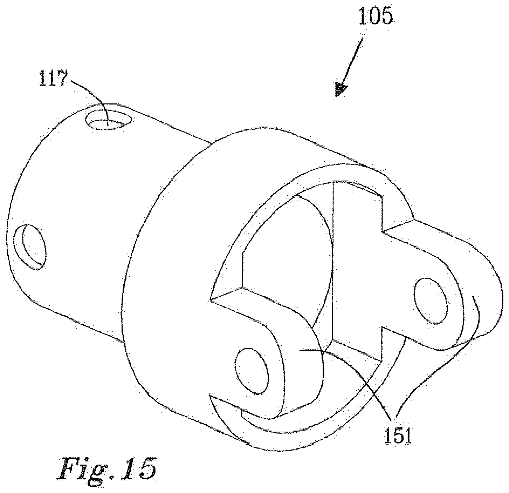

With reference to Figs. 1-4, there is shown a fixing device 1 for fixing an anti-skid device such as a snow chain to a wheel rim. Although other shapes may be used, as disclosed herein, the fixing device 1 is shown in the drawings as having a generally cylindrical shape with an axial direction A and a radial direction R, perpendicular to the axial direction A. The fixing device 1 can be divided into two major portions in the axial direction A; an inner plug portion 2 at an inner end 2 of the fixing device and an outer coupling portion 3. The plug portion 2 is sized and configured for fitting into a centre bore in a corresponding wheel rim and is shown with a first diameter d₁ and which is smaller than the diameter of the center bore in the wheel rim. When the fixing device is inserted into the centre bore in the wheel rim, the coupling portion 3 protrudes from the wheel rim and is accessible for attachment of an anti-skid device thereto. The coupling portion in Figs. 1-4 is shown with a second diameter d₂, which is larger than the first diameter d₁. The coupling portion 3 is shown in Figs. 1-4 in its simplest form and it is to be understood that the coupling portion 3 may be provided with specifically designed coupling elements as exemplified in Figs. 11 and 15.

The main components of the fixing device 1 are an outer casing 5, an inner core 6, two compressible springs 7 and four locking balls 8. The compressible springs 7 and the locking balls 8 form part of a locking/release mechanism as disclosed herein. It is to be understood that a fixing device 1 of the invention should not be considered to be limited to a locking/release mechanism of this kind but that any other suitable locking/release mechanism could be used instead, as set out herein.

The number of compressible springs and locking balls shown in the figures should not be considered limiting to the invention. Accordingly, the fixing device may comprise only one compressible spring or more than two compressible springs, such as three or four compressible springs. Likewise, only a single locking ball may be used although it is generally preferred to use a plurality of locking balls.

By a compressible spring is meant any member that can be compressed and that will spring back to its non-compressed state when the compression force is released. The compressible springs 7 in the fixing device 1 are compressible in the axial direction A of the fixing device 1.

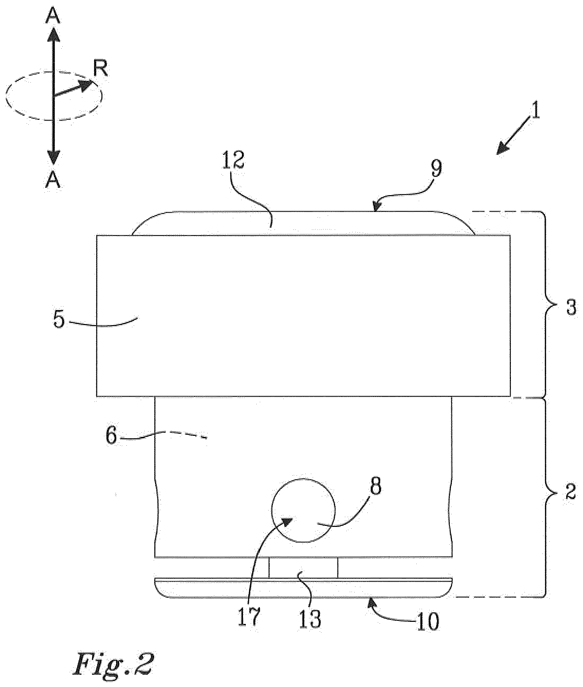

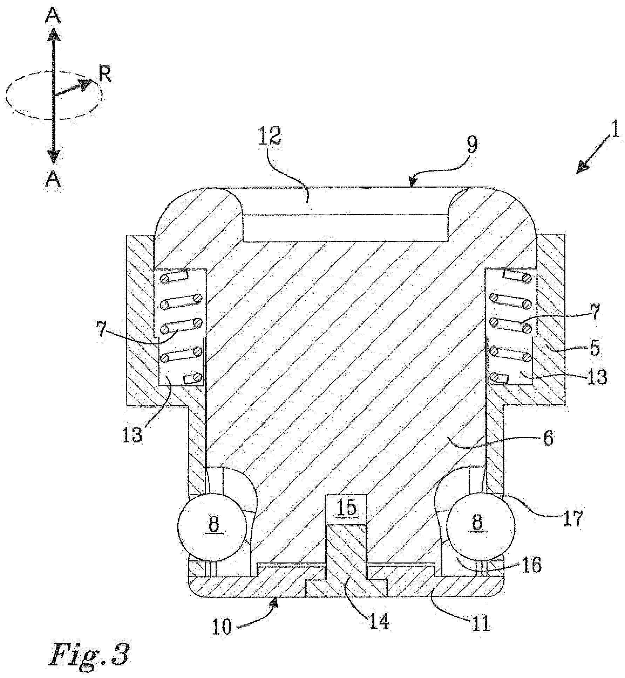

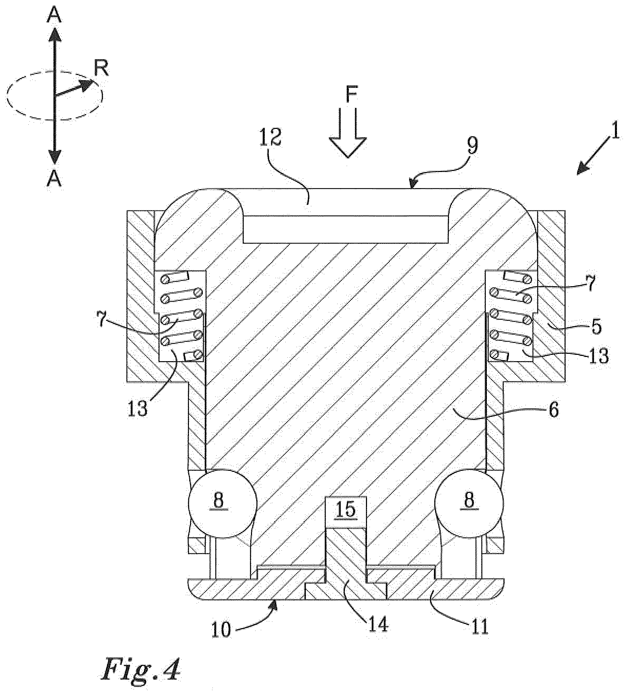

The inner core 6 is arranged inside the outer casing 5 and is telescopically movable in relation to the outer casing 5 between the positions shown in Figs 1 and 3 and in Figs. 2 and 4.

The fixing device 1 has an outer end surface 9 on the coupling portion 3 and an inner end surface 10 on the plug portion 2. The outer end surface 9 is formed by a part of the inner core 6 which protrudes out of the outer casing 5. The protruding part of the outer casing constitutes a push-button 12 for pushing the inner part 6 in a direction towards the inner end surface 10 of the fixing device 1. The push-button 12 may be formed as an integral part of the inner core 5 or may be formed separately and be subsequently attached to the remaining part of the inner core.

A cavity 13 is formed between the inner core 6 and the outer casing 5 in the widened portion of the fixing device 1 which is proximate to the outer end surface 9, i.e. in the coupling portion 3 of the fixing device 1. The compressible springs 7 are arranged in the cavity 13 such that they are prevented from moving out of position and with a principal extension in the axial direction A of the fixing device within the cavity 13. The cavity 13 may be a continuous cavity extending around the periphery of the inner core 6 as shown in the figures or may be separate cavities for each individual spring. The ends of the compressible springs 7 are preferably anchored to the inner core 6 and the outer cover 5. Such anchoring may be provided by sockets formed in the outer casing 5 and in the inner core at the ends of the cavity 13 or by any suitable attachment means known to the person skilled in the art such as gluing or welding.

The inner end surface 10 of the fixing device is formed by a bottom plate 11 which is attached to the inner core 6 with a pin 14 which is slidably arranged in a bore 15 in the inner core 6. The diameter of the bottom plate 11 is slightly larger than the diameter of the inner core 6 and matches the diameter of the outer casing 5, thus constituting a stopping member preventing the outer casing 5 from moving axially past the bottom plate 11.

As best seen in Figs. 3 and 4, the locking balls 8 rest in guiding grooves 16 which are arranged in the inner core 6 and extend in the axial direction, A. The guiding grooves 16 have a deep portion at an end remote from the inner end surface 10 of the fixing device 1 and a shallow portion proximal to the inner surface 10 of the fixing device. The terms "deep" and "shallow" are used herein as relative terms to indicate a difference in depth of different parts of the guiding grooves 16 along their axial extension. The locking balls may move in the guiding grooves 16 between the shallow portion and the deep portion. As the locking balls travel along the guiding grooves 16 in the axial direction, A, of the fixing device 1, they are simultaneously moved in the radial direction, R, of the fixing device, causing the locking balls 8 to be retracted into the fixing device 1 when they are located in the deep portions of the grooves 16 and to protrude out through holes 17 in the wall of the outer casing 5 when they are located in the shallow portions of the grooves 16.

The fixing device is operated by applying a compressive force F on the push-button 12 whereby the inner core 6 is moved in the axial direction A in relation to the outer casing 5. The movement causes the size of the cavity 13 with the compressible springs 7 to decrease in the axial direction, A, and the compressible springs 7 to be compressed. As shown in fig. 4, application of a compressive force F on the push-button 12 moves the locking balls 8 into the deep portions of the guiding grooves 16 where they are retracted into the fixing device. This position of the locking balls 8 constitute an application/release position for the fixing device allowing the fixing device to be inserted into or removed from a centre bore in a wheel rim.

When the compressive force F acting on the compressible springs 7 is released, the springs 7 expand and move the inner core 6 back to the rest position shown in Figs. 1 and 3 at the same time as the locking balls 8 return to the shallow parts of the guiding grooves 16 where they partially protrude from the outer casing 5 through the corresponding holes 17 in the outer casing 5. The rest position constitutes a locking position for the fixing device 1 in which the protruding locking balls 8 may be used for engaging with a corresponding locking member in the centre bore of a wheel rim.

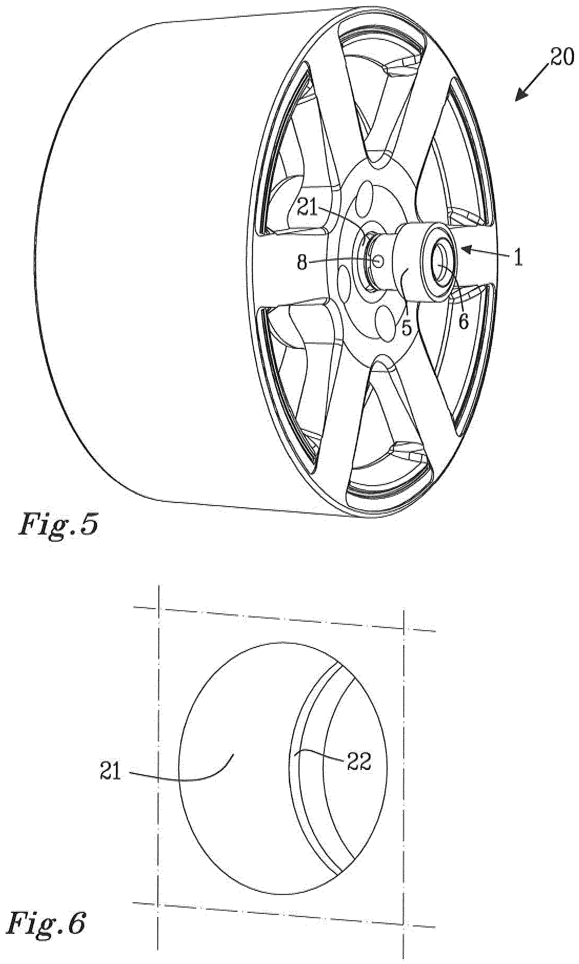

With reference to Fig. 5, there is shown a wheel rim 20 with a centre bore 21 and a fixing device 1. The fixing device 1 is shown as it appears while being inserted into the centre bore 2. Accordingly, the fixing device 1 is in the application/release position with the inner core 6 pushed into the outer casing 5 such that the locking balls 8 are retracted into the fixing device.

Fig. 6 shows a detailed view of the centre bore 21 in the wheel rim 20 seen from the inside surface of the wheel rim 20 which is the side of the wheel rim 20 that is facing towards the vehicle and which is opposite to the visible outside surface of the wheel rim 20. The centre bore 21 is shown to have a locking member in the form of a circumferentially extending locking groove 22 which is arranged to engage with the locking balls 8 on the fixing device 1 when securing the fixing device 1 in the centre bore 21 of the wheel rim 20. The outer casing 5 of the fixing device may consist of a friction-reducing material such as nylon or other plastic material in order to reduce friction between the wheel rim 20 and the fixing device 1 and to allow a certain degree of free-wheeling between the fixing device 1 and the wheel rim.

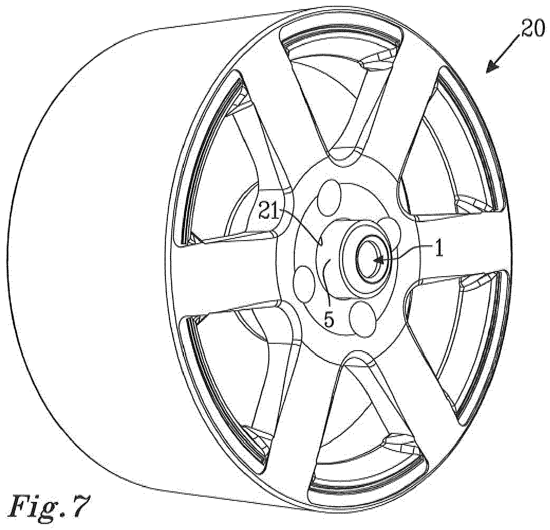

Fig. 7 shows the fixing device 1 after it has been inserted into the centre bore 21 in the wheel rim 20 and with the fixing device in the locking position with the locking balls protruding out through the openings 17 in the outer casing 5 of the fixing device 1 and engaging with the locking groove 22 inside the centre bore 21 of the wheel rim 20.

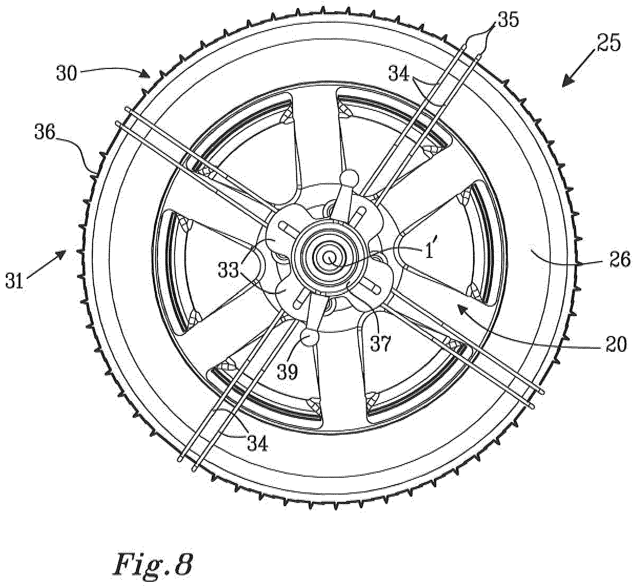

With reference to Fig. 8 there is shown a wheel 25 with an anti-skid arrangement 30 applied and fastened to the outwardly facing surface of the wheel 25 by means of a fixing device 1' in accordance with the invention. The wheel 25 comprises a wheel rim 20 in accordance with the invention and a tyre 26 mounted on the wheel rim 20. The anti-skid arrangement 30 comprises an anti-skid device 31 including a friction-increasing member 36 such as a snow chain. The anti-skid device 31 further comprises a carrier plate 32 with a central hole and four radially extending lobes 33 which provide attachment sites for radially extending connecting members in the form of spokes 34 which connect the carrier plate 32 with the friction-increasing member 36. The spokes 34 are illustrated in the figures as each consisting of a pair of suitably shaped metal rods. It is to be understood that other configurations of the connecting members may be used such as single rods or bands. The number of connecting members may also be different from that shown in the figures. Accordingly, the carrier plate 32 may carry fewer attachment sites for connecting members or more attachment sites for connection members.

The outer ends 35 of the spokes 34 are connected to the friction-increasing member 36 which is disposed on the thread of the tyre 26. The friction-increasing member 36 may be any commonly available friction-increasing device which allows mounting from the outside of the wheel 25. One non-limiting example of such friction-increasing device which is connected to radially extending spokes is disclosed in EP 2 050 590 A1.

However it is to be understood that connection between the friction-increasing member and the fixing device may be provided by a completely different connection arrangement, such as a knob or hub.

The anti-skid device further comprises a tensioning ring 37 having a pin 38 arranged on the inner wall of the tensioning ring 37 and having two handles extending radially outward from the outer wall of the tensioning ring 37.

The anti-skid device 31 in Fig. 8 is attached to the fixing device 1' by means of a screw coupling which also constitutes a tensioning means that serves to tighten the anti-skid device 31 on the wheel 25 by applying tension on the anti-skid device 31.

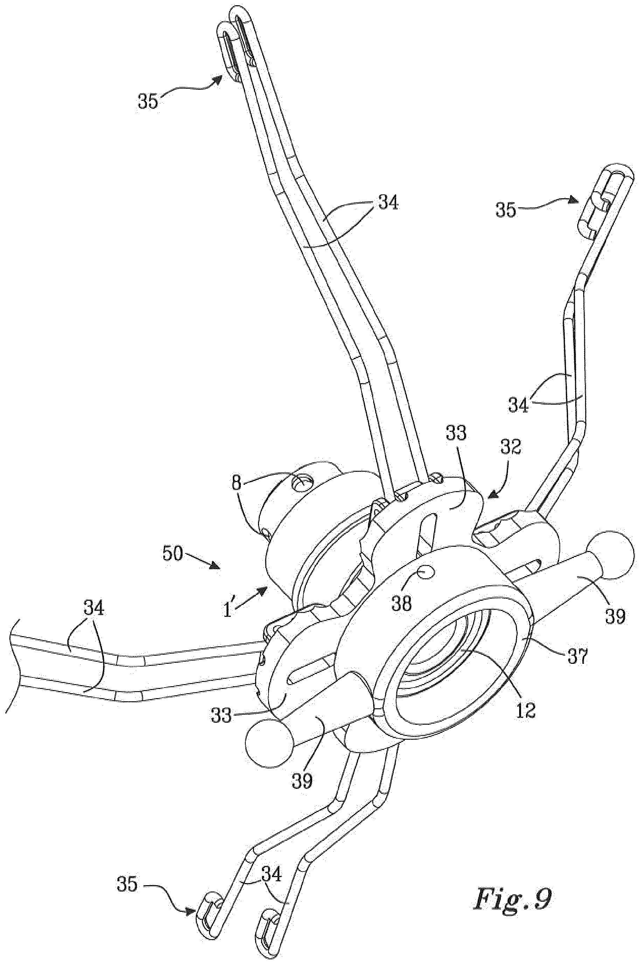

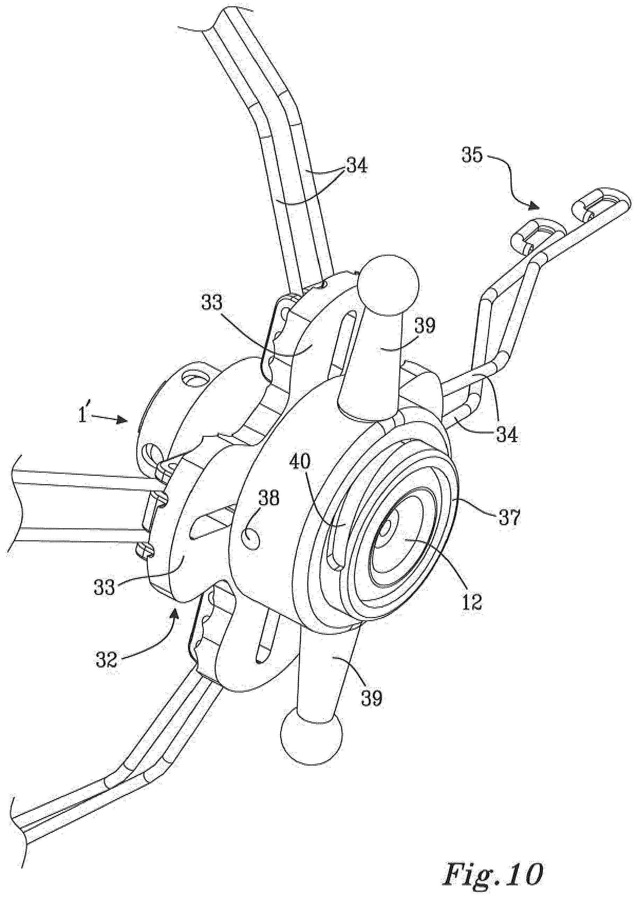

Figs. 9 and 10 show the coupling 50 between the fixing device 1' and the anti-skid device 31 on the wheel in Fig. 8 in closer detail. The coupling portion 3 of the fixing device is provided with a screw-thread 40 which engages with the pin 38 on the inner wall of the tensioning ring 37 enabling the tensioning ring to be screwed onto the coupling portion 3 of the fixing device 1'. The configuration of the screw-thread is best illustrated in Fig. 11 which shows the outer casing 5 of the fixing device 1' of the coupling arrangement in Fig. 8. By using the handles 39 to rotate the tensioning ring 37 clock-wise, the tensioning ring 37 is screwed inward on the fixing device 1 from the position shown in Fig. 9 to the position shown in Fig. 10.

As seen in Fig. 11, the outer casing 5 of the fixing device 1' is provided with a peripheral rim or ledge 41. In the assembled anti-skid arrangement 30, the carrier plate 32 and the tightening ring are mounted on the fixing device 1' in a stacked configuration with the carrier plate 32 positioned innermost between the ledge 41 and the tightening ring 37. The ledge 41 on the fixing device 1' thus acts as a stop for the carrier plate 32, preventing axial movement of the carrier plate 32 past the ledge 41.

When the tensioning ring 37 is screwed inward on the fixing device 1' it brings the carrier plate 32 into abutment with the ledge 41 on the fixing device 1'. This means that when the anti-skid arrangement 30 is applied to a wheel 25 as shown in Fig. 8, clockwise rotation of the tensioning ring 37 will cause the anti-skid device 31 will to be tightened on the wheel 25. The tightened position of the anti-skid device 31 is shown in Fig. 10. Anti-clockwise rotation of the tightening ring 37 causes the tightening ring 37 to be screwed outward to the position shown in Fig. 9 and brings the anti-skid device 31 into a loosened position.

The screw on anti-skid arrangement 30 which is shown in Figs. 8-10 has been pre-assembled by a manufacturer. However, it is to be understood that the anti-skid arrangement 30 may be modified to allow assembly and disassembly by a user.

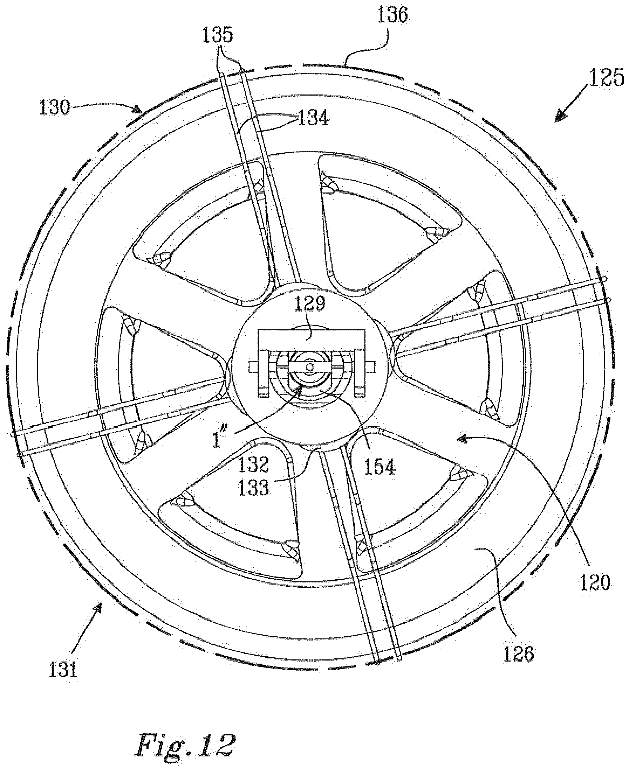

With reference to Fig. 12 there is shown a wheel 125 with an anti-skid arrangement 130 applied and fastened to the outwardly facing surface of the wheel 125 by means of a fixing device 101 in accordance with the invention. The wheel 125 comprises a wheel rim 120 in accordance with the invention and a tyre 126 mounted on the wheel rim 120. The anti-skid arrangement 130 comprises an anti-skid device 131 similar to that in Fig. 8 and including a friction-increasing member 136 such as a snow chain. The anti-skid device 131 further comprises a carrier plate 132 with a central hole and four radially extending lobes 133 which provide attachment sites for radially extending connecting members in the form of spokes 134 which connect the carrier plate 132 with the friction-increasing member 136. As in Fig. 8, the spokes 134 are illustrated in the figures as each consisting of a pair of suitably shaped metal rods although other configurations may be used, as set out herein.

The outer ends 135 of the spokes 134 are connected to the friction-increasing member 136 which is disposed on the thread of the tyre 126. The friction-increasing member 136 may be any commonly available friction-increasing device which allows mounting from the outside of the wheel 125.

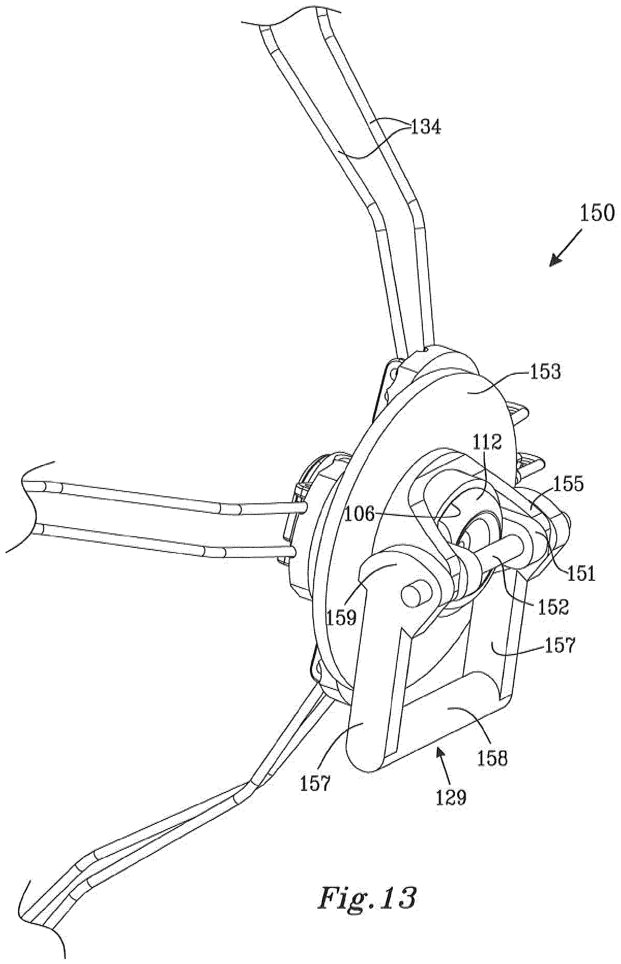

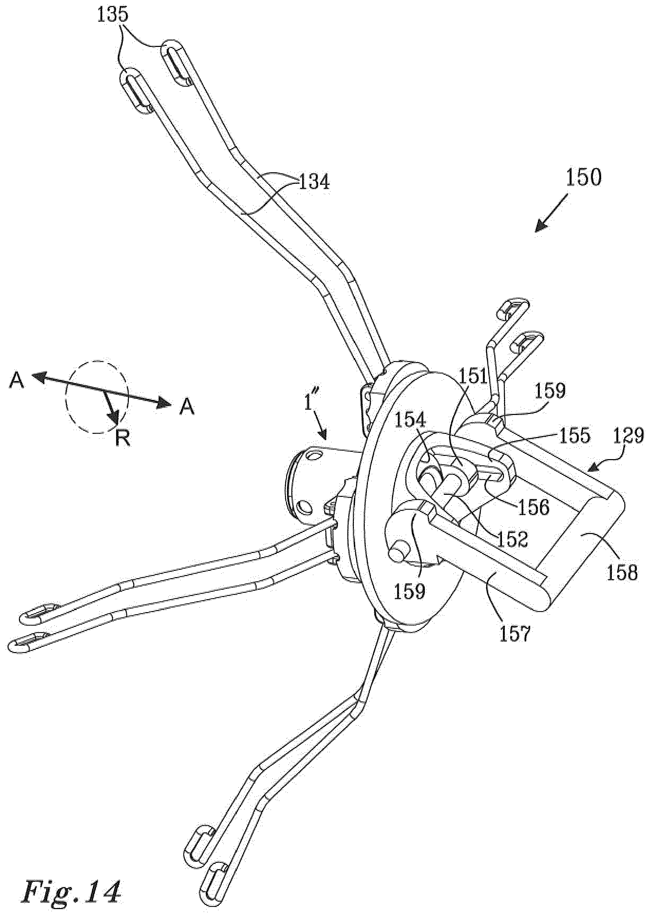

The anti-skid device 131 on the wheel in Fig. 12 differs from the anti-skid device in Fig. 8 in that it is attached to the fixing device 101 by means of a hinge coupling 150. A similarity is that the hinge coupling also constitutes a tensioning means that serves to tighten the anti-skid device 131 on the wheel 125 by applying tension on the anti-skid device 131. Figs. 13 and 14 show the coupling between the fixing device 1" and the anti-skid device 131 on the wheel in Fig. 12 in closer detail.

The coupling portion 103 of the fixing device 1" is provided with first hinge mountings 151 through which a hinge pin 152 is inserted The configuration of the coupling portion 103 of the fixing device 1" is best illustrated in Fig. 15 which shows the outer casing 105 of the fixing device 1" of the coupling arrangement 150 in Figs. 12-14. As seen in Fig. 15, the hinge mountings 151 are arranged diametrically opposite each other at the outer end 109 of the outer casing 105 of the fixing device 101.

The anti-skid device 131 further comprises a tightening plate 153 and a handle 129. The tightening plate 153 has a central hole 154 and second hinge mountings 155 arranged diametrically opposite each other at the periphery of the central hole 154 and through which the hinge pin 152 is inserted. The distance between the second hinge mountings 155 is greater than the distance between the first hinge mountings 151 which means that the second hinge mountings 155 are located outward of the first hinge mountings on the hinge pin 152 as seen in Figs. 13 and 14. The hinge pin 152 is inserted into the second hinge mountings 155 through elongated openings 156 which extend in the axial direction A of the coupling arrangement 150. The elongated openings 156 allow movement of the hinge pin 152 between an inner tensioning position and an outer loosened position. The tensioning position is shown in Fig. 13 and the loosened position is shown in Fig. 14.

A further element in the form of a handle 129 is mounted on the hinge pin 152. The handle comprises two parallel arms 157 arranged on either side of the hinge mountings 151, 155 and being connected by a gripping element 158 at the outer end of the handle 129. Each of the parallel arms 157 of the handle 129 has a cam surface 159 which abuts the tightening plate 153.

In the assembled anti-skid arrangement 130, the carrier plate 132 and the tightening plate 153 are mounted on the fixing device 101 in a stacked configuration with the carrier plate 132 positioned inward of the tightening plate 153.

With reference to Fig. 13, the handle 129 is shown in a folded down position, with the parallel arms 157 arranged perpendicular to the axial direction A of the coupling arrangement. In this position, the cam surfaces 159 at the ends of the arms 157 have moved the hinge pin 152 to the outer position in the elongated openings 156 in the second hinge mountings 155. In this position the hinge pin 152 is moved away from the outer surface 109 of the fixing device 1" and the push-button 112 at the outer end of the inner core 106 of the fixing device 1" is unaffected by the hinge pin 152. This means that the locking balls 108 (not visible in Fig. 13) are in the locking position.

By raising the handle 129 from the surface of the tightening plate 153, the cam surfaces 159 at the ends of the handle arms 157 causes the hinge pin 152 to be moved to the inner position in the elongated openings 156 and to press the push-button 112 to the application/release position as disclosed herein.

The anti-skid arrangements described in relation to Figs. 8-11 and Figs. 12-15 should not be considered to be limiting to the invention. In particular, the coupling between the fixing device and the anti-skid device may be different from the coupling arrangements described in connection with the figures and may comprise snap-fittings, bayonet-fittings, etc, as known in the art.

## Claims

1. A fixing device (1; 1'; 1") for a vehicle tyre (26; 126) anti-skid device (31; 131), **characterized in that** said fixing device (1; 1'; 1 ") comprises a plug portion (2) and a coupling portion (3), said plug portion (2) being configured to fit into a centre bore (21;121) in a wheel rim (20; 120), and comprising locking means for releasably fixing said fixing device (1; 1'; 1") in said centre bore (21), and said coupling portion (3) being arranged for coupling said fixing device (1; 1'; 1 ") to said anti-skid device (31; 131).

2. A fixing device according to claim 1, wherein said releasable locking means comprises a snap-in locking arrangement.

3. A fixing device according to claim 2, wherein said snap-in locking arrangement comprises an intermediate actuation member such as a spring or a gear arranged to directly or indirectly move at least one locking element such as a locking ball (8; 108) or a locking pin between a release position and a fixing position.

4. A fixing device according to claim 1, wherein said releasable locking means comprises a manually actuated release mechanism arranged to move one or more locking elements such as a locking pin or a locking groove between a release position and a fixing position.

5. A fixing device according to any one of the preceding claims, wherein said releasable locking means are arranged to be actuated by a push-element such as a push-button (12; 112).

6. A fixing device according to any one of the preceding claims, wherein said coupling portion (3) comprises a first connection element arranged to cooperate with a second connection element arranged on an anti-skid device for forming a coupling arrangement, said first connection element preferably being one of a groove (40), a hinge mounting (151), a pin, a screw thread or a locking rim

7. A fixing device according to any one of the preceding claims, wherein said fixing device comprises means (50; 150) for tensioning of an anti-skid device (31; 131) and wherein said means for tensioning of an anti-skid device preferably are coupled to or form part of said coupling portion (3).

8. A fixing device according to any one of the preceding claims, further including an anti-skid device (31; 131), which comprises a friction increasing member (36; 136) and a coupling portion configured for mating connection of said friction increasing member (36; 136) to said coupling portion (3) of said fixing device (1; 1'; 1 ") according to any one of claims 1-7.

9. A fixing device according to claim 8, wherein said coupling portion (3) of said fixing device (1; 1'; 1") comprises a first connection element, said first connection element preferably being one of a groove (40), a hinge mounting (151), a pin, a screw thread or a locking rim and said coupling portion of said anti-skid device comprises a second connection element arranged to cooperate with said first connection element on said fixing device (1; 1'; 1") for forming a coupling arrangement, said second connection element being configured to mate with said first connection element and preferably being one of a pin (38), a hinge pin (152), a groove, a screw thread or a locking rim

10. An anti-skid arrangement (30; 130) for a vehicle tyre (26, 126), **characterized in that** said anti-skid arrangement (30; 130) comprises a fixing device (1; 1'; 1") according to any one of claims 1-7 and an anti-skid device (31; 131) as defined in claim 8 or 9.

11. An anti-skid arrangement according to claim 10, wherein said coupling portion on said fixing device (3) and said coupling portion on said anti-skid device (31; 131) form a coupling arrangement (50; 150) and are arranged to be connected by means of mating connection elements (38, 40; 151, 152, 155, 156) provided on said fixing device (1; 1'; 1") and on said anti-skid device (31; 131).

12. An anti-skid arrangement according to claim 11, wherein said coupling arrangement (50; 150) is pre-connected by a manufacturer and preferably is a permanent coupling arrangement.

13. An anti-skid arrangement according to claim 11 or 12, wherein said mating connection elements comprise a guiding groove (40) and a pin (38).

14. An anti-skid arrangement according to any one of claims 10-12, wherein said coupling arrangement (150) comprises a lever actuated hinge (151, 152, 155, 156).

15. An anti-skid arrangement according to any one of claims 10-14, wherein said anti-skid arrangement (30; 130) is provided with a handle (39; 129) being directly or indirectly attached to one of said mating connection elements and being arranged for manipulation of said mating connection elements between at least two different and distinct positions such as a locking position and a release position and/or a tensioning position and a loosening position.

16. Method for mounting an anti-skid device on a vehicle wheel, comprising the steps of:
a) providing a fixing device according to any one of claims 1-7,
b) providing an anti-skid device according to claim 8 or 9,
c) providing a vehicle wheel having a wheel rim (20; 120) having a centre bore (21;121) adapted to receive and retain a fixing device (1; 1'; 1 ") according to any one of claims 1-7,
d) connecting said coupling portion of said fixing device with said coupling portion of said anti-skid device,
e) inserting said plug portion (2) of said fixing device (1; 1'; 1 ") into said centre bore (21, 121) of said wheel rim (20; 120) and ascertaining that said releasable locking means is in a locked position in said centre bore (21, 121) of said wheel rim (20; 120);
wherein step d) is performed before step e) or step e) is performed before step d).

## Patentansprüche

1. Fixiervorrichtung (1; 1'; 1") für eine Antischlupfvorrichtung (31; 131) für einen Fahrzeugreifen (26; 126), **dadurch gekennzeichnet, dass** die Fixiervorrichtung (1; 1'; 1") einen Stopfenabschnitt (2) und einen Kopplungsabschnitt (3) umfasst, wobei der Stopfenabschnitt (2) dafür konfiguriert ist, in eine Mittelbohrung (21; 121) in einer Radfelge (20; 120) zu passen, und Verriegelungsmittel zum lösbaren Fixieren der Fixiervorrichtung (1; 1'; 1") in der Mittelbohrung (21) umfasst und der Kopplungsabschnitt (3) zum Koppeln der Fixiervorrichtung (1; 1'; 1") an die Antischlupfvorrichtung (31; 131) angeordnet ist.

2. Fixiervorrichtung nach Anspruch 1, wobei die lösbaren Verriegelungsmittel eine Einrast-Verriegelungsanordnung umfassen.

3. Fixiervorrichtung nach Anspruch 2, wobei die Einrast-Verriegelungsanordnung ein dazwischenliegendes Betätigungselement, wie beispielsweise eine Feder oder ein Zahnrad, umfasst, das dafür angeordnet ist, wenigstens ein Verriegelungselement, wie beispielsweise eine Verriegelungskugel (8,; 108) oder einen Verriegelungsstift, zwischen einer Freigabestellung und einer Fixierstellung zu bewegen.

4. Fixiervorrichtung nach Anspruch 1, wobei die lösbaren Verriegelungsmittel einen manuell betätigten Freigabemechanismus umfassen, der dafür angeordnet ist, ein oder mehrere Verriegelungselemente, wie beispielsweise einen Verriegelungsstift oder eine Verriegelungsrille, zwischen einer Freigabestellung und einer Fixierstellung zu bewegen.

5. Fixiervorrichtung nach einem der vorhergehenden Ansprüche, wobei die lösbaren Verriegelungsmittel dafür angeordnet sind, durch ein Druckelement, wie beispielsweise einen Druckknopf (12, 112), betätigt zu werden.

6. Fixiervorrichtung nach einem der vorhergehenden Ansprüche, wobei der Kopplungsabschnitt (3) ein erstes Verbindungselement umfasst, das dafür angeordnet ist, mit einem zweiten Verbindungselement zusammenzuwirken, das an einer Antischlupfvorrichtung angeordnet ist, zum Bilden einer Kopplungsanordnung, wobei das erste Verbindungselement vorzugsweise entweder eine Rille (40), eine Scharnieranbringung (151), ein Stift, ein Schraubengewinde oder ein Verriegelungsrand ist.

7. Fixiervorrichtung nach einem der vorhergehenden Ansprüche, wobei die Fixiervorrichtung Mittel (50; 150) zum Spannen einer Antischlupfvorrichtung (31; 131) umfasst und wobei die Mittel zum Spannen einer Antischlupfvorrichtung vorzugsweise an den Kopplungsabschnitt (3) gekoppelt sind oder einen Teil desselben bilden.

8. Fixiervorrichtung nach einem der vorhergehenden Ansprüche, die ferner eine Antischlupfvorrichtung (31; 131) einschließt, die ein Reibungssteigerungselement (36; 136) und einen Kopplungsabschnitt, der für eine Passverbindung des Reibungssteigerungselements (36; 136) mit dem Kopplungsabschnitt (3) der Fixiervorrichtung (1; 1'; 1") nach einem der Ansprüche 1 bis 7 konfiguriert ist, umfasst.

9. Fixiervorrichtung nach Anspruch 8, wobei der Kopplungsabschnitt (3) der Fixiervorrichtung (1; 1'; 1") ein erstes Verbindungselement umfasst, wobei das erste Verbindungselement vorzugsweise entweder eine Rille (40), eine Scharnieranbringung (151), ein Stift, ein Schraubengewinde oder ein Verriegelungsrand ist, und der Kopplungsabschnitt der Antischlupfvorrichtung ein zweites Verbindungselement umfasst, das dafür angeordnet ist, mit dem ersten Verbindungselement an der Fixiervorrichtung (1; 1'; 1") zusammenzuwirken zum Bilden einer Kopplungsanordnung, wobei das zweite Verbindungselement dafür konfiguriert ist, mit dem ersten Verbindungselement zusammenzupassen und vorzugsweise entweder ein Stift (38), ein Scharnierstift (152), eine Rille, ein Schraubengewinde oder ein Verriegelungsrand ist.

10. Antischlupfanordnung (30; 130) für einen Fahrzeugreifen (26; 126), **dadurch gekennzeichnet, dass** die Antischlupfanordnung (30; 130) eine Fixiervorrichtung (1; 1'; 1") nach einem der Ansprüche 1 bis 7 und eine Antischlupfvorrichtung (31; 131) nach Anspruch 8 oder 9 umfasst.

11. Antischlupfanordnung nach Anspruch 10, wobei der Kopplungsabschnitt (3) an der Fixiervorrichtung und der Kopplungsabschnitt an der Antischlupfvorrichtung (31; 131) eine Kopplungsanordnung (50; 150) bilden und dafür angeordnet sind, mit Hilfe von zusammenpassenden Verbindungselementen (38, 40; 151, 152, 155, 156), die an der Fixiervorrichtung (1; 1'; 1") und an der Antischlupfvorrichtung (31; 131) bereitgestellt werden, verbunden zu werden.

12. Antischlupfanordnung nach Anspruch 11, wobei die Kopplungsanordnung (50; 150) durch einen Hersteller vorverbunden ist und vorzugsweise eine dauerhafte Kopplungsanordnung ist.

13. Antischlupfanordnung nach Anspruch 11 oder 12, wobei die zusammenpassenden Verbindungselemente eine Führungsrille (40) und einen Stift (38) umfassen.

14. Antischlupfanordnung nach einem der Ansprüche 10 bis 12, wobei die Kopplungsanordnung (150) ein hebelbetätigtes Scharnier (151, 152, 155, 156) umfasst

15. Antischlupfanordnung nach einem der Ansprüche 10 bis 14, wobei die Antischlupfanordnung (30; 130) mit einem Handgriff (39; 129) versehen ist, der unmittelbar oder mittelbar an einem der zusammenpassenden Verbindungselemente befestigt ist und für eine Manipulation der zusammenpassenden Verbindungselemente zwischen wenigstens zwei unterschiedlichen und getrennten Stellungen, wie beispielsweise einer Verriegelungsstellung und einer Freigabestellung und/oder einer Spannungsstellung und einer Lockerungsstellung, angeordnet ist.

16. Verfahren zum Anbringen einer Antischlupfvorrichtung an einem Fahrzeugrad, wobei das Verfahren die folgenden Schritte umfasst:
a) Bereitstellen einer Fixiervorrichtung nach einem der Ansprüche 1 bis 7,
b) Bereitstellen einer Antischlupfvorrichtung nach Anspruch 8 oder 9,
c) Bereitstellen eines Fahrzeugrades, das eine Radfelge (20; 120) hat, die eine Mittelbohrung (21; 121) hat, die dafür eingerichtet ist, eine Fixiervorrichtung (1; 1'; 1") nach einem der Ansprüche 1 bis 7 aufzunehmen und festzuhalten,
d) Verbinden des Kopplungsabschnitts der Fixiervorrichtung mit dem Kopplungsabschnitt der Antischlupfvorrichtung,
e) Einsetzen des Stopfenabschnitts (2) der Fixiervorrichtung (1; 1'; 1") in die Mittelbohrung (21; 121) Radfelge (20; 120) und Sicherstellen, dass sich die lösbaren Verriegelungsmittel in einer verriegelten Stellung in der Mittelbohrung (21; 121) der Radfelge (20; 120) befinden,
wobei Schritt d) vor Schritt e) durchgeführt wird oder Schritt e) vor Schritt d) durchgeführt wird.

## Revendications

1. Dispositif de fixation (1; 1'; 1") pour dispositif antidérapant (31; 131) de pneu de véhicule (26; 126), **caractérisé en ce que** ledit dispositif de fixation (1; 1'; 1") comprend une section à prise (2) et une section d'accouplement (3), ladite section à prise (2) étant conçue pour s'ajuster dans un alésage central (21 ;121) d'une jante de roue (20; 120), et comprenant un moyen de verrouillage pour fixer de manière dissociable ledit dispositif de fixation (1; 1'; 1") dans ledit alésage central (21), et ladite section d'accouplement (3) étant conçue pour accoupler ledit dispositif de fixation (1; 1'; 1") audit dispositif antidérapant (31; 131).

2. Dispositif de fixation selon la revendication 1, dans lequel ledit moyen de verrouillage dissociable comprend un système de verrouillage à enclenchement.

3. Dispositif de fixation selon la revendication 2, dans lequel ledit système de verrouillage à enclenchement comprend un élément d'actionnement intermédiaire comme un ressort ou un engrenage conçu pour déplacer directement ou indirectement au moins un élément de verrouillage comme une bille de verrouillage (8; 108) ou une cheville de verrouillage entre une position de relâchement et une position de fixation.

4. Dispositif de fixation selon la revendication 1, dans lequel ledit moyen de verrouillage dissociable comprend un mécanisme de relâchement actionné manuellement conçu pour déplacer un ou plusieurs éléments de verrouillage comme une cheville du verrouillage ou une gorge de verrouillage entre une position de relâchement et une position de fixation.

5. Dispositif de fixation selon l'une quelconque des revendications précédentes, dans lequel ledit moyen de verrouillage dissociable est conçu pour être actionné par un élément de poussée comme un bouton de poussée (12; 112).

6. Dispositif de fixation selon l'une quelconque des revendications précédentes, dans lequel ladite section d'accouplement (3) comprend un premier élément de connexion conçu pour coopérer avec un second élément de connexion disposé sur un dispositif antidérapant pour former un système d'accouplement, ledit premier élément de connexion étant de préférence un élément parmi une gorge (40), une monture de charnière (151), une cheville un filet de vis ou une jante de verrouillage.

7. Dispositif de fixation selon l'une quelconque des revendications précédentes, dans lequel ledit dispositif de fixation comprend un moyen (50; 150) de tension d'un dispositif antidérapant (31; 131) et ledit moyen de tension d'un dispositif antidérapant étant de préférence accouplé à ou formant partie intégrante de ladite section d'accouplement (3).

8. Dispositif de fixation selon l'une quelconque des revendications précédentes, incluant en outre un dispositif antidérapant (31; 131) qui comprend un élément augmentant la fiction (36; 136) et une section d'accouplement conçue pour harmoniser la connexion dudit élément augmentant la friction (36; 136) avec ladite section d'accouplement (3) dudit dispositif de fixation (1; 1'; 1") selon l'une quelconque des revendications 1 à 7.

9. Dispositif de fixation selon la revendication 8, dans lequel ladite section d'accouplement (3) dudit dispositif de fixation (1; 1'; 1") comprend un premier élément de connexion, ledit premier élément de connexion étant de préférence un élément parmi une gorge (40), une monture de charnière (151), une cheville, un filet de vis ou une jante de verrouillage et ladite section d'accouplement dudit dispositif antidérapant comprenant un second élément de connexion conçu pour coopérer avec ledit premier élément de connexion sur ledit dispositif de fixation (1; 1'; 1") pour former un système d'accouplement, ledit second élément de connexion étant conçu pour s'harmoniser avec ledit premier élément de connexion et étant de préférence un élément parmi une cheville (38), une cheville de charnière (152), une gorge, un filet de vis ou une jante de verrouillage.

10. Dispositif antidérapant (30; 130) pour pneu de véhicule (26, 126), **caractérisé en ce que** ledit dispositif antidérapant (30; 130) comprend un dispositif de fixation (1; 1'; 1") selon l'une quelconque des revendications 1 à 7 et un dispositif antidérapant (31; 131) tel que défini dans la revendication 8 ou 9.

11. Dispositif antidérapant selon la revendication 10,
dans lequel ladite section d'accouplement dudit dispositif de fixation (3) et ladite section d'accouplement dudit dispositif antidérapant (31; 131) forment un système d'accouplement (50; 150) et sont conçus pour être connectés au moyen d'éléments de connexion harmonisés (38, 40; 151, 152, 155, 156) prévu sur ledit dispositif de fixation (1; 1'; 1") et sur ledit dispositif antidérapant (31; 131).

12. Dispositif antidérapant selon la revendication 11, dans lequel ledit dispositif d'accouplement (50; 150) est pré-connecté par un fabricant et de préférence un dispositif d'accouplement permanent.

13. Dispositif antidérapant selon la revendication 11 ou 12, dans lequel lesdits éléments de connexion harmonisée comprennent une gorge de guidage (40) et une cheville (38).

14. Dispositif antidérapant selon l'une quelconque des revendications 10 à 12, dans lequel ledit système d'accouplement (150) comprend une charnière actionnée par levier (151, 152, 155, 156).

15. Dispositif antidérapant selon l'une quelconque des revendications 10 à 14, dans lequel ledit dispositif antidérapant (30; 130) est pourvu d'une poignée (39; 129) qui est directement ou indirectement fixée à un desdits éléments de connexion harmonisés et qui est conçue pour la manipulation desdits éléments de connexion harmonisés entre au moins deux positions différentes et distinctes comme une position de verrouillage et une position de relâchement/une position de tension et une position de desserrage.

16. Procédé de montage d'un dispositif antidérapant sur une roue de véhicule, comprenant les étapes suivantes :
a) prévision d'un dispositif de fixation selon l'une quelconque des revendications 1 à 7,
b) prévision d'un dispositif antidérapant selon la revendication 8 ou 9,
c) prévisions d'une roue de véhicule comportant une jante de roue (20; 120) dotée d'un alésage central (21 ;121) apte à recevoir et à retenir un dispositif de fixation (1; 1'; 1") selon l'une quelconque des revendications 1 à 7,
d) connexion de ladite section d'accouplement dudit dispositif de fixation à ladite section d'accouplement dudit dispositif antidérapant,
e) insertion de ladite section de prise (2) dudit dispositif de fixation (1; 1'; 1") dans ledit alésage central (21, 121) de ladite jante de roue (20; 120) et vérification que ledit moyen de verrouillage dissociable est en position verrouillée dans ledit alésage central (21, 121) de ladite jante de roue (20; 120) ;
l'étape d) étant réalisée avant l'étape e) ou l'étape e) étant réalisée avant l'étape d).
